# EUROPÄISCHE PATENTSCHRIFT

(11) **EP 3 418 451 B1**
(45) Veröffentlichungstag und Bekanntmachung des Hinweises auf die Patenterteilung: **24.07.2019**
(21) Anmeldenummer: 17177475.5
(22) Anmeldetag: 22.06.2017
(51) Int. Cl.: F01P 3/20, F01P 7/16, F02B 29/04, E21B 7/24, F01N 3/02, F15B 21/042, F15B 21/06, F15B 1/26, E02D 7/18

(54) **ARBEITSGERÄT MIT HYDRAULISCHEM ANTRIEB FÜR TIEFBAUARBEITEN**
TOOL WITH HYDRAULIC DRIVE FOR CIVIL ENGINEERING WORK
APPAREIL DE TRAVAIL DOTÉ D'UN ENTRAÎNEMENT HYDRAULIQUE POUR TRAVAUX DE GÉNIE CIVIL

(43) Veröffentlichungstag der Anmeldung: 26.12.2018
(73) Patentinhaber: ABI Anlagentechnik-Baumaschinen-Industriebedarf Maschinenfabrik und Vertriebsgesellschaft mbH, 63843 Niedernberg (DE)
(72) Erfinder: Heichel, Christian, 63843 Niedernberg (DE); Kleibl, Albrecht, 63762 Großostheim (DE)
(74) Vertreter: Patentanwälte Dörner & Kötter PartG mbB

(56) Entgegenhaltungen:
- EP-A1- 1 607 600
- EP-A1- 2 557 233
- GB-A- 2 407 432

## Beschreibung

Die Erfindung betrifft ein Arbeitsgerät mit hydraulischem Antrieb für Tiefbauarbeiten, insbesondere ein Bohr- oder Vibrationsrammgerät nach dem Oberbegriff des Patentanspruchs 1. Die Erfindung betrifft weiterhin ein Verfahren zur temporären Erwärmung des Hydraulikfluids des Hydraulikkreislaufs eines Arbeitsgerätes mit hydraulischem Antrieb für Tiefbauarbeiten, insbesondere eines Bohr- oder Vibrationsrammgeräts nach dem Patentanspruch 13.

Im Bauwesen werden unterschiedliche Arbeitsgeräte mit hydraulischem Antrieb für Tiefbauarbeiten in einer hydraulischen Gruppe betrieben. Die hydraulische Gruppe besteht regelmäßig aus einer Hydraulikpumpe, die von einem Verbrennungsmotor angetrieben wird, einem Arbeitsgerät mit hydraulischem Antrieb, insbesondere einem Hydraulikmotor sowie einer Steuer- bzw. Regeleinheit. Die hydraulische Gruppe wird mit einem Fluid in einen Hydraulikkreislauf betrieben. Das Produkt aus Druck- und Volumenstrom des Fluids ergibt die hydraulische Leistung.

Als Arbeitsgeräte werden beispielsweise Vibrationsrammen bzw. Vibratoren verwendet, um Objekte, wie beispielsweise Stahlprofile, in den Boden einzubringen oder aus dem Boden zu ziehen oder auch um Bodenmaterial zu verdichten. Der Boden wird durch Vibration angeregt und erreicht so einen "pseudoflüssigen" Zustand. Durch statische Auflast kann das Rammgut dann in den Baugrund gedrückt werden. Vibrationsrammen weisen regelmäßig linear wirkende Schwingungserreger auf, deren Fliehkraft durch rotierende Unwuchten generiert wird. Der Verlauf der Geschwindigkeit des linearen Schwingungserregers entspricht einer periodisch wiederkehrenden Funktion, beispielsweise einer Sinusfunktion. Die Schwingungserreger werden mit hydraulischen Drehantrieben betrieben, welche die Wellen, auf denen die Unwuchten angeordnet sind, in Rotation versetzen.

Weiterhin im Bauwesen verbreitete Arbeitsgeräte mit hydraulischem Antrieb sind so genannte Bohrgeräte. Diese werden unter anderem zur Herstellung von Pfahlgründungen, z.B. Bohrpfähle oder Betonpfähle zur Erhöhung der Tragfähigkeit des Baugrundes oder für Bodenaustauschmaßnahmen verwendet. Die mit dem Bohrgerät verbundenen Bohrantriebe sind regelmäßig hydraulische Drehantriebe, an denen ein Bohrgestänge bzw. Bohrwerkzeuge befestigt ist bzw. sind.

In den Hydraulikkreisläufen solcher hydraulisch angetriebener Bohr- bzw. Vibrationsrammgeräte zirkulieren mehrere 100 Liter Hydrauliköl. Aufgrund der Wirkungsgrade hydraulischer Maschinen und hydraulischer Leistungsübertragung muss das Öl große Verlustwärmemengen aufnehmen. Diese Energie erwärmt das Öl, so dass dieses eine Temperatur mit günstiger Viskosität erreicht. Gleichzeitig wird die Wärme über die Komponenten der hydraulischen Gruppe an die Umgebung abgegeben oder bei gegebener Temperatur durch einen zusätzlich angeordneten Kühler abgenommen. Ziel ist es, die Öltemperatur und insbesondere die Ölviskosität so einzustellen, dass der Verschleiß an den hydraulischen Maschinen wie Pumpen und Motoren sowie deren Verlustleistungen möglichst gering sind. Zum Antrieb der Hydraulikpumpen dient üblicherweise ein aufgeladener Dieselmotor.

Bei niedrigen Umgebungstemperaturen, kurzen Einschaltzeiten oder bei Maschinen, die den zirkulierenden Ölvolumenstrom der am Arbeitsgerät abgerufenen Leistung anpassen, wie dies in der EP 2 557 233 B1 beschrieben ist, können zeitweilig Zustände auftreten, in denen der hinsichtlich Öltemperatur und Viskosität günstige Betriebszustand nicht erreicht wird. Bei steigender Viskosität des Hydrauliköls wird die am Arbeitsgerät verfügbare Leistung reduziert. Aufgrund der hohen Verlustleistung wird zugleich der Kraftstoffverbrauch des Verbrennungsmotors erhöht. Darüber hinaus entspricht das Hydrauliköl nicht mehr der von dem Hersteller der Komponenten der Hydraulikpumpen und Hydraulikmotoren vorgeschriebenen Spezifikationen, weshalb mit einem erhöhten Verschleiß zu rechnen ist.

Um die vorgenannten Nachteile zu vermeiden, ist es bekannt, das Hydrauliköl mit Hilfe von elektrischen oder auch dieselbetriebenen Standheizungen vorzuwärmen. Um ein Ölvolumen von mehreren 100 Litern um 30 bis 50°C zu erwärmen, ist eine Energie erforderlich, die im zweistelligen Kilowattstundenbereich liegt. In der Praxis kann die erforderliche Energie noch deutlich größer sein, da Hydrauliksysteme üblicherweise nicht isoliert, sondern derart gestaltet sind, dass sie möglichst viel Wärme an die Umgebung abgeben. Weiterhin ist es bekannt, zur Ölvorwärmung in dem Hydrauliköltank Heizstäbe anzuordnen. Abgesehen von der auch hier erforderlichen hohen Energiemenge hat sich bei dieser Lösung als nachteilig erwiesen, dass sich Hydrauliköl, welches sich direkt auf der Mantelfläche eines Heizstabs befindet, punktuell sehr erwärmt wird, wodurch dieses geschädigt werden kann.

Hier will die Erfindung Abhilfe schaffen. Der Erfindung liegt die Aufgabe zu Grunde, ein Arbeitsgerät mit hydraulischem Antrieb für Tiefbauarbeiten, insbesondere Bohr- oder Vibrationsrammgerät bereitzustellen, bei dem eine temporäre Erwärmung des Hydraulikfluids ohne zusätzliche Zuführung von Fremdenergie ermöglicht ist. Gemäß der Erfindung wird diese Aufgabe durch ein Arbeitsgerät mit den Merkmalen des kennzeichnenden Teils des Patentanspruchs 1 gelöst.

Mit der Erfindung ist ein Arbeitsgerät mit hydraulischem Antrieb für Tiefbauarbeiten, insbesondere Bohr- oder Vibrationsrammgerät bereitgestellt, bei dem eine temporäre Erwärmung des Hydraulikfluids ohne die Zufuhr von zusätzliche Fremdenergie ermöglicht ist. Dadurch, dass wenigstens ein Wärmeübertrager zur Übertragung thermischer Energie eines Fluidstroms des Verbrennungsmotors auf das Fluid des Hydraulikkreislaufs angeordnet ist, ist eine temporäre Erwärmung des Hydraulikfluids durch die Abwärme bzw. Verlustwärme des Verbrennungsmotors bewirkt. Die im Stand der Technik zusätzlich vorhandene, mit Fremdenergie gespeiste Standheizung ist nicht mehr erforderlich. Der Gesamtwirkungsgrad des Arbeitsgerätes ist hierdurch erhöht.

Unter dem Begriff "Wärmeübertrager" ist vorliegend jedwede Einrichtung zu verstehen, die geeignet ist, thermische Energie eines Fluidstroms des Verbrennungsmotors auf das Fluid des Hydraulikkreislaufs zu übertragen.

In Weiterbildung der Erfindung sind der Hydraulikkreislauf und der Kühlkreislauf des Verbrennungsmotors über einen Wärmeübertrager thermisch verbunden. Hierdurch ist die Nutzung der Abwärme des Kühlkreislaufs des Verbrennungsmotors zur Erwärmung des Hydraulikfluids erzielt, wodurch zugleich die erforderliche Kühlleistung des Verbrennungsmotors reduziert ist. Durch die reduzierte erforderliche Kühlleistung des Kühlers des Verbrennungsmotors ist wiederum eine Reduzierung des Treibstoffverbrauchs erzielt, wodurch wiederum die Energieeffizienz des Arbeitsgerätes weiter erhöht ist.

In weiterer Ausgestaltung der Erfindung ist der Wärmeübertrager zur kombinierten Wärme- und Stoffübertragung eingerichtet, wobei das Hydraulikfluid mit dem Kühlmittel identisch ist und wobei der Wärmeübertrager Mittel zur Ver- und Entkopplung von Hydraulikkreislauf und Kühlkreislauf umfasst, die vorzugsweise eine über ein Mehrwegeventil angeschlossene Bypassleitung umfassen. Hierdurch kann das Hydraulikfluid des Hydraulikkreislaufs direkt durch den Kühlkreislauf des Verbrennungsmotors geleitet werden, wodurch eine maximale Wärmeübertragung auf das Hydraulikfluid erzielt ist. Nach Erzielung der gewünschten Erwärmung des Hydraulikfluids kann der Hydraulikkreislauf wiederum vom Kühlkreislauf entkoppelt werden. Eine mögliche Überhitzung des Hydraulikfluids ist hierdurch verhindert. Bevorzugt kommt als Hydraulikfluid sowie als Kühlmittel ein synthetischer Ester (HEES) zum Einsatz.

Vorteilhaft erfolgt die Verbindung des Hydraulikkreislaufs und des Kühlmittelkreislaufs über einen in dem Hydraulikkreislauf angeordneten Hydraulikfluidtank. Hierdurch ist gleichmäßige Erwärmung eines großen Hydraulikfluidvolumens ermöglicht.

In alternativer Ausgestaltung der Erfindung umfasst der Wärmeübertrager einen Wärmetauscher, der dem Kühler vorgeschaltet in dem Kühlkreislauf des Verbrennungsmotors angeordnet ist, wobei der Kühlkreislauf und/oder der Hydraulikkreislauf vorteilhaft eine den Wärmeübertrager umgehende Bypassleitung aufweist, in der ein Ventil angeordnet ist, das in Abhängigkeit von der Temperatur des Hydraulikfluidstroms und/oder des Kühlmittelstroms ansteuerbar ist. Dabei kann insbesondere ein Wärmetauscher zum Einsatz kommen, bei dem das Kühlmittel im Gleich- oder Gegenstromverfahren entlang des Hydraulikfluids geführt wird, wodurch die Wärmeübertragung auf das Hydraulikfluid erzielt ist. In Abhängigkeit von der Temperatur des Hydraulikfluidstroms bzw. auch des Kühlmittelstroms ist der Wärmetauscher durch die Bypassleitung von dem Kühlkreislauf entkoppelbar. Einer Überhitzung des Hydraulikfluids oder auch des Kühlmittels des Kühlkreislaufes des Verbrennungsmotors ist so entgegengewirkt.

In Weiterbildung der Erfindung ist der Wärmeübertrager über ein Ventil mit dem Hydraulikkreislauf verbunden, das über ein Steuer- und Regelmodul ansteuerbar ist, wobei in dem Hydraulikkreislauf ein Temperatursensor angeordnet ist, der mit dem Steuer- und Regelmodul verbunden ist. Hierdurch ist eine automatische Regelung der Temperatur des Hydraulikfluids ermöglicht. Das Regelmodul ist dabei derart ausgebildet, dass die von dem Temperatursensor gelieferte Ist-Temperatur mit einer hinterlegten Soll-Temperatur verglichen wird. Bei Vorliegen einer Differenz zwischen Ist- und Soll-Temperatur unter Berücksichtigung einer ebenfalls hinterlegten tolerierbaren Temperaturdifferenz erfolgt durch das Steuer- und Regelmodul eine Ansteuerung des Ventils, wodurch die Bypassleitung geöffnet, bzw. geschlossen wird. Hierdurch ist eine temporäre, bedarfsgerechte Erwärmung des Hydraulikfluids ermöglicht. Bei Erreichen der maximal zulässigen Viskosität des Hydraulikfluids ist so eine Entkopplung des Hydraulickreislaufs von dem Wärmeübertrager ermöglicht.

In Ausgestaltung der Erfindung sind der Hydraulikkreislauf und der Abgasstrom des Verbrennungsmotors über einen Wärmeübertrager, insbesondere einen Wärmetauscher thermisch verbunden. Hierdurch ist die Nutzung der Abwärme des Abgasstroms des Verbrennungsmotors zur Erwärmung des Hydraulikfluids bewirkt, wodurch die Energieeffizienz des Arbeitsgerätes weiter erhöht ist.

In weiterer Ausgestaltung der Erfindung ist an dem Verbrennungsmotor eine Abgangsleitung angeordnet, die mit einem Abzweig versehen ist, der mit dem Wärmeübertrager verbunden ist, wobei die Abgangsleitung vorteilhaft mit einer Klappensteuerung versehen ist, über die sie temporär verschließbar ist. Hierdurch ist eine temporäre Zuführung des Abgasstroms zum Wärmeübertrager erzielt, wodurch einer Überhitzung des Hydraulikfluids entgegengewirkt ist.

In weiterer Ausgestaltung der Erfindung ist der Abgasstrom über einen ein Wärmeträgerfluid aufweisenden Transferkreislauf mit dem Hydraulikkreislauf thermisch verbunden, der über eine Pumpe betrieben ist. Dabei ist bevorzugt ein Steuer- und Regelmodul angeordnet, über das die Pumpe dieses Transferkreislaufes steuerbar ist, wobei in dem Hydraulikkreislauf ein Temperatursensor angeordnet ist, der mit dem Steuer- und Regelmodul verbunden ist. Hierdurch ist eine in Abhängigkeit von der Temperatur des Hydraulikfluids steuerbarer Transferkreislauf erzielt, wodurch eine bedarfsgerechte Zuführung von aus dem Abgas gewonnener Wärmeenergie zu dem Hydraulikfluid ermöglicht ist. Bevorzugt ist das Wärmeträgerfluid ein Ester, eine Salzschmelze oder ein flüssiges Metall. Vorteilhaft weist der Transferkreislauf zwei Wärmetauscher auf, über den er thermisch mit dem Abgasstrom auf der einen Seite und mit dem Hydraulikkreislauf auf der anderen Seite verbunden ist.

In weiterer Ausgestaltung der Erfindung weist der Verbrennungsmotor einen Lader auf und der verdichtete Ladeluftstrom des Laders und der Hydraulikkreislauf sind über einen Wärmeübertrager, der vorzugsweise einen Wärmetauscher umfasst, thermisch verbunden, wobei der Wärmeübertrager bevorzugt in der Ladeluftleitung hinter dem Lader angeordnet ist. Hierdurch ist eine Nutzung der Abwärme des verdichteten Ladeluftstroms zur Erwärmung des Hydraulikfluids ermöglicht. Als Wärmeübertrager kann auch ein Wärmetransferkreislauf angeordnet sein, der jeweils über einen Wärmetauscher mit dem Ladeluftstrom sowie dem Hydraulikkreislauf verbunden ist und über eine Pumpe betrieben ist, die bevorzugt über ein angeordnetes Steuer- und Regelmodul ansteuerbar ist, das mit einem in dem Hydraulikkreislauf angeordneten Temperatursensor verbunden ist.

Der vorliegenden Erfindung liegt weiterhin die Aufgabe zu Grunde, ein Verfahren zur temporären Erwärmung des Hydraulikfluids des Hydraulikkreislaufs eines Arbeitsgerätes mit hydraulischem Antrieb für Tiefbauarbeiten, insbesondere eines Bohr- oder Vibrationsrammgerätes bereitzustellen, das die Gewährleistung eines erforderlichen Viskositätsbereichs des Hydraulikfluids ohne Zuführung zusätzlicher Fremdenergie ermöglicht. Gemäß der Erfindung wird diese Aufgabe durch ein Verfahren mit den Merkmalen des Patentanspruchs 13 gelöst.

Mit der Erfindung ist ein Verfahren zur temporären Erwärmung des Hydraulikfluids des Hydraulikkreislaufs eines Arbeitsgerätes mit hydraulischem Antrieb für Tiefbauarbeiten, insbesondere eines Bohr- oder Vibrationsgerätes bereitgestellt, das die Gewährleistung eines Viskositätsbereichs des Hydraulikfluids ohne eine Zuführung zusätzlicher Fremdenergie ermöglicht. Dadurch, dass das Hydraulikfluid für einen definierten Zeitraum durch einen Wärmeübertrager geleitet wird, dem zur Übertragung thermischer Energie ein Fluidstrom des Verbrennungsmotors zugeleitet wird, ist eine Erwärmung des Hydraulikfluid ausschließlich über Abwärme bzw. Verlustwärme des Verbrennungsmotors bewirkt. Hierdurch ist die Energieeffizienz des Arbeitsgerätes erhöht.

In Weiterbildung der Erfindung wird der Wärmeübertrager über eine Bypassleitung mit dem Hydraulikkreislauf verbunden, in der ein Mehrwegeventil angeordnet wird. Hierdurch ist der Wärmeübertrager bedarfsweise zu- bzw. abkoppelbar, wodurch eine Überhitzung des Hydraulikfluids entgegengewirkt ist. Als Wärmeübertrager kann hier insbesondere ein Wärmetauscher nach dem Gleichstrom- oder dem Gegenstromprinzip zum Einsatz kommen.

In Weiterbildung der Erfindung wird der Kühlkreislauf des Verbrennungsmotors als kombinierter Stoff- und Wärmeübertrager verwendet, wobei das Hydraulikfluid zugleich als Kühlmittel verwendet wird und wobei der Hydraulikkreislauf bedarfsweise für einen definierten Zeitraum mit dem Kühlkreislauf des Verbrennungsmotors verbunden wird. Hierdurch ist eine direkte, hocheffiziente Wärmeübertragung der Verlustwärme des Verbrennungsmotors auf das Hydraulikfluid,

insbesondere ohne Zuschaltung eines zusätzlichen Wärmetauschers bewirkt, wodurch eine Erwärmung des Hydraulikfluids in kurzer Zeit ermöglicht ist. Zugleich ist durch das Hydraulikfluid eine Kühlleistung auf die Verbrennungsmaschine bewirkt, weshalb die zusätzlich zu über den Kühler zu erbringende Kühlleistung reduziert ist, was wiederum eine Senkung des Treibstoffverbrauchs des Verbrennungsmotors zur Folge hat.

Bevorzugt wird als Hydraulikfluid sowie als Kühlmittel ein synthetisches Ester verwendet. Ester zeichnen sich gegenüber Mineralölen neben ihrer sehr guten biologischen Abbaubarkeit durch einen höheren Viskositätsindex aus, weshalb sie als Hydraulikflüssigkeit sehr geeignet sind. Weiterhin sind sie gegenüber extremen Arbeitstemperaturen unempfindlich, wohingegen Mineralöle bei hohen Temperaturen sehr schnell altern. Darüber hinaus können Ester dauerhaft bei einer Temperatur von 120°C eingesetzt werden, weshalb sie auch als Kühlmittel für den Verbrennungsmotor geeignet sind. Hierbei ergibt sich der weitere Vorteil, dass der Kühlkreislauf gegenüber dem Einsatz von konventionellem Motorkühlmittel erst bei deutlich höheren Temperaturen druckfest ausgeführt werden muss.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Figur 1: die schematische Darstellung der hydraulischen Gruppe eines Arbeitsgeräts mit Ankopplung des Hydraulikkreislaufs an den Kühlkreislauf des Verbrennungsmotors über einen Wärmetauscher;
- Figur 2: die Darstellung der hydraulischen Gruppe eines Arbeitsgeräts mit Ankopplung des Hydraulikkreislaufs an den Kühlkreislauf des Verbrennungsmotors über einen Wärmetauscher in einer weiteren Ausführungsform;
- Figur 3: die Darstellung der hydraulischen Gruppe eines Arbeitsgeräts mit Verbindung des Hydraulikkreislaufs mit den Kühlkreislauf des Verbrennungsmotors;
- Figur 4: die Darstellung der hydraulischen Gruppe eines Arbeitsgeräts mit Verbindung des Hydraulikkreislaufs mit den Kühlkreislauf des Verbrennungsmotors in einer weiteren Ausführungsform;
- Figur 5: die schematische Darstellung einer hydraulischen Gruppes eines Arbeitsgeräts mit Ankopplung des Hydraulikkreislaufs an den Abgasstrom des Verbrennungsmotors über einen Wärmetauscherkreislauf;
- Figur 6: die Darstellung der hydraulischen Gruppe eines Arbeitsgeräts mit Ankopplung des Hydraulikkreislaufs sowohl an den Kühlkreislauf des Verbrennungsmotors über einen Wärmetauscher, als auch an den Abgasstrom des Verbrennungsmotors über einen Wärmetauscherkreislauf;

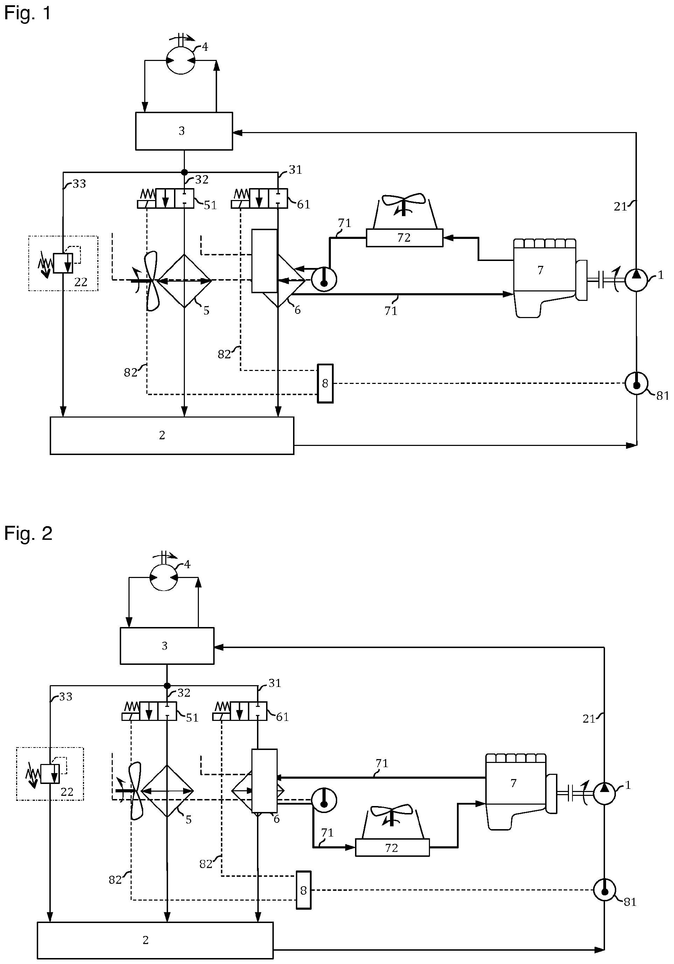

In Figur 1 ist die hydraulische Gruppe eines Arbeitsgeräts mit hydraulischem Antrieb für Tiefbauarbeiten, beispielsweise eines Bohr- oder Vibrationsrammgerätes schematisch dargestellt. Sie umfasst eine Hydraulikpumpe 1, die in der Leitung 21 zwischen einem Hydrauliköltank 2 und einem Steuerblock 3 angeordnet und durch einen Verbrennungsmotor 7 angetrieben ist. Der Steuerblock 3 ist mit einem Hydraulikmotor 4 verbunden, dessen Hydraulikölzufluss er steuert. Der Steuerblock 3 ist rücklaufseitig über drei Leitungen 31, 32, 33 mit dem Hydrauliköltank 2 verbunden. Die erste Leitung 31 ist als Koppelleitung über ein 2/2-Wegeventil 61 über einen Wärmetauscher 6 geführt. Die zweite Leitung 32 ist über ein weiteres 2/2-Wegeventil 51 über einen Kühler 5 geführt. In der dritten Leitung 33 ist ein Folgeventil 22 als Havarieventil angeordnet, welches auch als freie Leitung zum Tank genutzt werden kann, um Druckverluste zu minimieren.

Üblicherweise sind zusätzlich zu den 2/2-Wegeventilen 51, 61 sowie dem Havarieventil 22 Druckbegrenzungsventile angeordnet, die auch in Form einer Druckstufe in den Ventilen integriert sein können. Diese Druckbegrenzungsventile sind dabei derart vorgespannt, dass erheblicher Staudrücke von 5,5 bar und mehr gewährleistet sind. Hierdurch ist ein erheblicher Energiebedarf in einer Größenordnung von bis zu 12 kW verursacht. Diese Staudrücke werden vorgehalten, um beim Anhalten des Arbeitsgerätes, welches beispielsweise ein Vibrator mit umlaufenden Unwuchtmassen sein kann, Kaviation zu vermeiden. Es wurde gefunden, dass dieser erhebliche Energiebedarf erheblich reduziert werden kann, indem die vorgenannten Ventile als ansteuerbare Proportionalventile ausgeführt werden. Da die erheblichen Staudrücke nur in bestimmten Zuständen erforderlich sind, können die Proportionalventile im Normalbetrieb mit erheblich geringeren Staudrücken eingestellt werden. Ereignisbezogen, beispielsweise wenn das Arbeitsgerät abgeschaltet wird, können die Proportionalventile dann über eine mit diesen verbundene Steuerung so verstellt werden, dass ein hoher Staudruck gebildet wird - gegebenenfalls auch höher als die vorgenannten 5,5 bar.

Über den Wärmetauscher 6 ist die Leitung 31 einerseits und der Kühlkreislauf 71 des Verbrennungsmotors 7 andererseits geführt. Dabei ist der Wärmetauscher 6 in dem Kühlkreislauf hinter dem Kühler 72 angeschlossen. Die Temperatur in der Leitung vom Kühler 72, der das Kühlmittel des Verbrennungsmotors 7 kühlt, zum Verbrennungsmotor 7 beträgt bei den meisten Motoren weniger als 90°C. Das Hydrauliköl kann dieser Temperatur länger ausgesetzt werden. Verbleibt Hydrauliköl in dem Wärmetauscher 6, der diese Temperatur erreicht, wird das Hydrauliköl nicht geschädigt. Allerdings wird die von dem Kühlmittel aufgenommene Abwärme des Verbrennungsmotors 7 in diesem Fall nicht maximal genutzt, da ein großer Teil der Wärmeenergie bereits in dem vorgeschalteten Kühler 72 an die Umgebung abgegeben worden ist. Ein besserer Wirkungsgrad wird erzielt, wenn der Wärmetauscher 6 an die Leitung vom Verbrennungsmotor 7 zum Kühler 72 angeschlossen wird (wie in Figur 2 dargestellt). Dabei ist jedoch zu beachten, dass die Kühlmitteltemperatur hier möglicherweise zu hoch ist, um stehendes Hydrauliköl, welches nicht ständig ausgetauscht wird, im Wärmetauscher 6 verbleiben zu lassen. In diesem Fall sollte der Wärmetauscher 6 bevorzugt in der Zeit, in der die erste Leitung 31 über das 2/2-Wegeventil 61 verschlossen ist, das Hydrauliköl also nicht über die erste Leitung 31 geleitet wird, von der Versorgung mit dem Motorkühlmittel getrennt werden, um die Wärmezufuhr zu unterbrechen. Hierzu könnte beispielsweise eine den Wärmetauscher 6 umgehende, über ein angeordnetes Ventil einkoppelbare Bypassleitung in dem Kühlkreislauf 71 des Verbrennungsmotors 7 angeordnet werden.

Im Ausführungsbeispiel ist in der Leitung 21 zwischen der Pumpe 1 und dem Hydrauliktank 2 ein Temperatursensor 81 angeordnet, der mit einer Steuer- und Regeleinrichtung 8 verbunden ist. Die Steuer und Regeleinrichtung 8 ist über Steuerleitungen 82 mit den 2/2-Wegeventilen 51, 61 verbunden und derart eingerichtet, dass in dem Fall, dass die von dem Temperatursensor 81 gemeldete Temperatur niedriger ist, als eine in der Steuer- und Regeleinrichtung 8 hinterlegte Grenztemperatur, das 2/2-Wegeventil 61 geöffnet, und das 2/2-Wegeventil 51 geschlossen wird. In dieser Stellung wird das Hydrauliköl vom Steuerblock 3 über den Wärmetauscher 6 geführt, wodurch dieses erwärmt wird. Nach Erreichen einer in der Steuer- und Regeleinrichtung 8 hinterlegten Zieltemperatur wird das 2/2-Wegeventil 61 geschlossen und das 2/2-Wegeventil 51 geöffnet, wonach das Hydrauliköl vom Steuerblock 3 über den Kühler 5 zum Hydrauliköltank 2 geleitet wird.

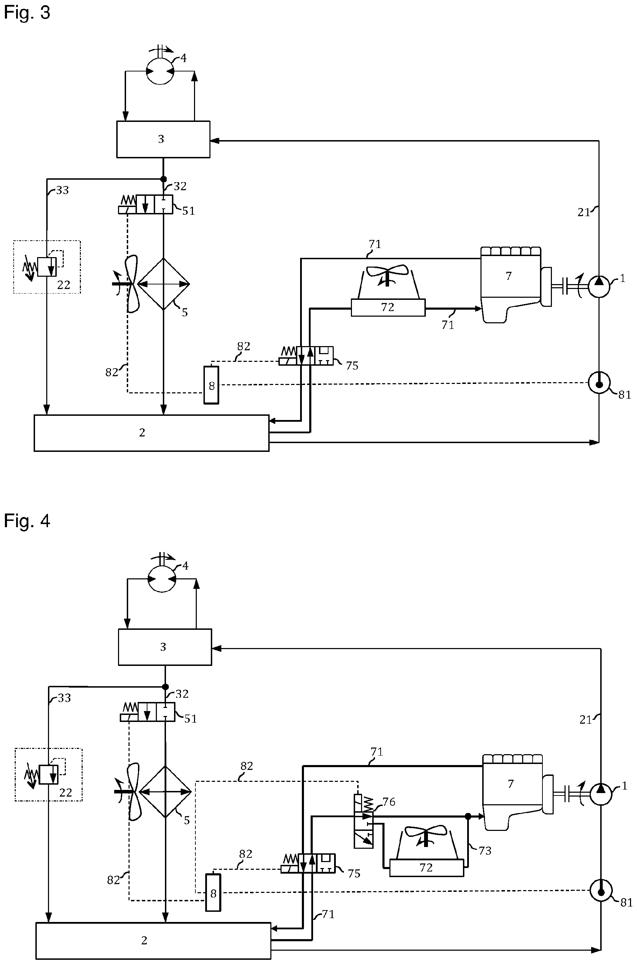

Im Ausführungsbeispiel gemäß Figur 3 ist der Wärmeübertrager zur kombinierten Stoff- und Wärmeübertragung eingerichtet. Wesentliches Bauteil des Wärmeübertragers ist hier der vorhandene Hydrauliköltank 2. Dabei kommt als Hydraulikflüssigkeit für den Hydraulikkreislauf des Hydraulikmotors 4 sowie als Kühlmittel für den Kühlkreislauf 71 des Verbrennungsmotors 7 ein identisches Fluid zum Einsatz. Der Hydrauliköltank 2 des Hydraulikkreislaufs ist hier über ein zwischengeschaltetes 4/2 Wegeventil 75 direkt mit dem Kühlkreislauf 71 des Verbrennungsmotors 7 verbunden. Das 4/2 Wegeventil 75 ist, wie auch das 2/2 Wegeventil 51 über Steuerleitungen 82 mit der Steuer- und Regeleinrichtung 8 verbunden, über die dieses ansteuerbar ist.

Wird das 4/2-Wegeventil 75 durch die Steuer- und Regeleinrichtung 8 derart eingestellt, dass die Zu- und Rücklaufleitung des Kühlkreislaufs 71 durchgängig gestellt sind, wird das Hydrauliköl über die - nicht dargestellte - Kühlmittelpumpe des Verbrennungsmotors 7 direkt aus dem Hydrauliköltank 2 in den Kühlkreislauf 71 des Verbrennungsmotors 7 gefördert, wodurch dieses direkt, ohne Zwischenschaltung eines Wärmetauschers, durch die Abwärme des Verbrennungsmotors 7 erwärmt wird, bevor es in den Hydrauliköltank 2 zurückgeleitet wird.

Im Ausführungsbeispiel gemäß Figur 4 ist der Kühler 72 in einer Bypassleitung 73 angeordnet, die vorlaufseitig über ein 3/2 Wegeventil 76 mit dem Kühlkreislauf 71 verbunden ist. Hierdurch kann der Kühler 72 in Zeiten, in denen dieser nicht erforderlich ist, ausgekoppelt werden. Im Ausführungsbeispiel ist das 3/2-Wegeventil 76 ebenfalls über Steuerleitungen 82 mit der Steuer- und Regeleinrichtung 8 verbunden, über die es ansteuerbar ist.

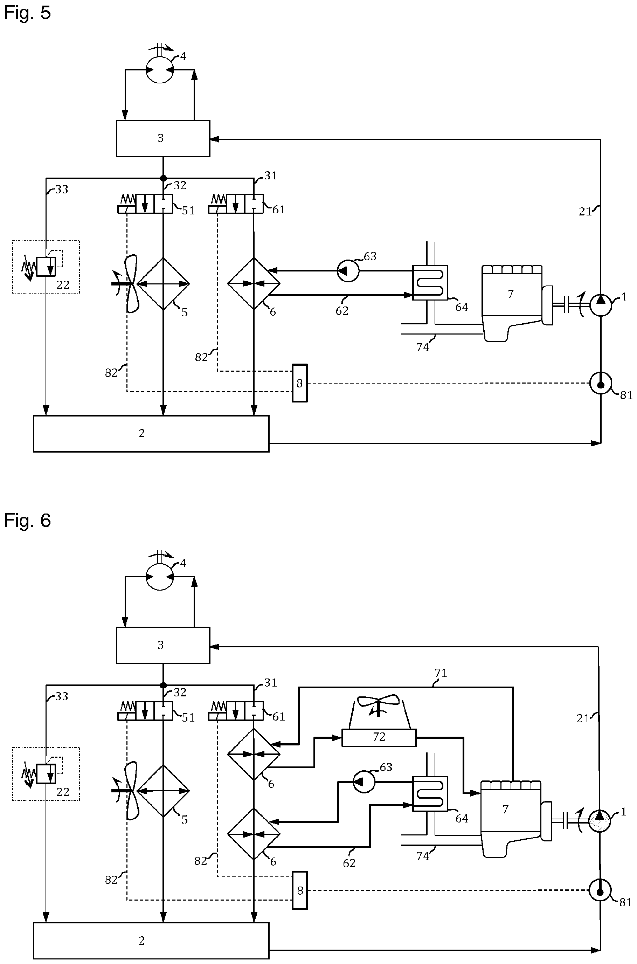

Im Ausführungsbeispiel gemäß Figur 5 ist der Wärmetauscher 6 in einen Wärmetransferkreislauf 62 eingebunden. Der Wärmetransferkreislauf 62 umfasst eine Pumpe 63, über die ein Wärmetransfermedium zwischen diesem Wärmetauscher 6 und einem zweiten angeordneten Wärmetauscher 64 im Kreislauf geführt wird. Der zweite Wärmetauscher 64 ist mit der Abgasleitung 74 des Verbrennungsmotors 7 verbunden, sodass er vom Abgasstrom des Verbrennungsmotors 7 durchströmt werden kann.

Da im Bereich der Abgasleitung 74 sehr hohe Temperaturen herrschen können, ist als Wärmetransfermedium ein Ester als temperaturbeständiges Medium zwischengeschaltet. Als weitere temperaturbeständige Wärmeträgerflüssigkeiten können auch Salzschmelzen oder theoretisch auch flüssige Metalle eingesetzt werden. Der zweite, direkt an der Abgasleitung 73 des Verbrennungsmotors 7 angeordnete Wärmetauscher 64 überträgt die Wärme auf das Zwischenmedium, über das die Wärme wiederum über den ersten Wärmetauscher 6 auf das Hydrauliköl übertragen wird. Zur Unterbrechung der Wärmezufuhr auf das Hydrauliköl kann einfach die Pumpe 63 abgeschaltet werden. Hierzu ist es zweckmäßig, die Pumpe 63 ebenfalls mit der Steuer- und Regeleinrichtung 8 zu verbinden, die in diesem Fall derart einzurichten ist, dass bei Unterbrechung des 2/2-Wegeventils 61 zugleich die Pumpe 63 abgeschaltet bzw. in Durchlaufstellung des 2/2-Wegeventils 61 die Pumpe 63 aktiviert wird.

Alternativ kann der zweite Wärmetauscher 64 auch dem Ladeluftkühler vorgeschaltet an einem Lader eines Verbrennungsmotors 7 angeordnet werden, um die Wärme des ebenfalls eine sehr hohe Temperatur aufweisenden Ladeluftstroms zur Erwärmung des Hydrauliköls zu nutzen. Selbstverständlich ist es auch möglich, mehrere Wärmetauscher anzuordnen, um die verschiedenen Abwärmequellen des Verbrennungsmotors zur Erwärmung des Hydrauliköls zu nutzen. Beispielsweise kann in dem Wärmetransferkreislauf 62 auch ein dritter Wärmetauscher angeordnet sein, über den der Ladeluftstrom geführt wird.

Es besteht auch die Möglichkeit, zur Nutzung der Abgaswärme das Abgassystem, beispielsweise nach einem vorhandenen Katalysator zu verzweigen und einen Strang unverändert zum Auspuff zu leiten sowie den anderen Strang an den Wärmetauscher 6 anzuschließen, um die Wärme über diesen Wärmetauscher 6 direkt der Hydraulikflüssigkeit zuzuführen. Hierzu ist lediglich ein Wärmetauscher 6 erforderlich, da nur ein Teil des Abgasstroms genutzt wird. Der zuvor beschriebene zusätzliche Wärmetransferkreislauf ist nicht erforderlich. Zur Unterbrechung der Wärmezufuhr an das Hydrauliköl kann der in den Wärmetauscher mündende Abgasstrang zwischen der Verzweigung und dem Wärmetauscher 6 durch eine Klappe oder einen entsprechend Schieber geschlossen werden. Diese Lösung hat den Vorteil, dass der im Abgassystem durch den Abgasstrom aufbauende Gegendruck nicht steigt.

Im Ausführungsbeispiel gemäß Figur 6 sind in der ersten Leitung 31 zwei Wärmetauscher 6, 6' hintereinander angeordnet. Über den Wärmetauscher 6 ist der Kühlkreislauf 71 des Verbrennungsmotors 7 geführt. Dabei ist der Wärmetauscher 6 analog zum Ausführungsbeispiel gemäß Figur 2 an die Leitung vom Verbrennungsmotor 7 zum Kühler 72 angeschlossen. Weiterhin wird zusätzlich die Abwärme des Abgasstroms des Verbrennungsmotors 7 genutzt. Hierzu ist der Wärmetauscher 6' analog dem Ausführungsbeispiel gemäß Figur 6 in einen Wärmetransferkreislauf 62 eingebunden. Der Wärmetransferkreislauf 62 umfasst auch hier eine Pumpe 63, über die ein Wärmetransfermedium zwischen diesem Wärmetauscher 6' und einem zweiten angeordneten Wärmetauscher 64 im Kreislauf geführt wird. Der zweite Wärmetauscher 64 ist mit der Abgasleitung 74 des Verbrennungsmotors 7 verbunden, sodass er vom Abgasstrom des Verbrennungsmotors 7 durchströmt werden kann. Alternativ besteht auch hier die vorstehend beschrieben Möglichkeit zur Nutzung der Abgaswärme das Abgassystem, beispielsweise nach einem vorhandenen Katalysator zu verzweigen und einen Strang unverändert zum Auspuff zu leiten sowie den anderen Strang an direkt an den Wärmetauscher 6' anzuschließen, um die Wärme über diesen Wärmetauscher 6 direkt der Hydraulikflüssigkeit zuzuführen, ohne dass es der Zwischenschaltung eines Wärmetransferkreislaufes bedarf.

## Patentansprüche

1. Arbeitsgerät mit hydraulischem Antrieb für Tiefbauarbeiten, insbesondere Bohr- oder Vibrationsrammgerät, umfassend einen Hydraulikmotor, der über ein Fluid eines Hydraulikkreislaufs betrieben ist, der über eine Hydraulikpumpe gespeist ist, die von einem Verbrennungsmotor angetrieben ist, **dadurch gekennzeichnet, dass** wenigstens ein Wärmeübertrager zur Übertragung thermischer Energie eines Fluidstroms des Verbrennungsmotors (7) auf das Fluid des Hydraulikreislaufs angeordnet ist.

2. Arbeitsgerät nach Anspruch 1, **dadurch gekennzeichnet, dass** der Hydraulikkreislauf und der Kühlkreislauf (71) des Verbrennungsmotors (7) über einen Wärmeübertrager thermisch verbunden sind.

3. Arbeitsgerät nach Anspruch 2, **dadurch gekennzeichnet, dass** der Wärmeübertrager zur kombinierten Wärme- und Stoffübertragung eingerichtet ist, wobei das Hydraulikfluid mit dem Kühlmittel identisch ist und wobei der Wärmeübertrager Mittel zur Ver- und Entkopplung von Hydraulikkreislauf und Kühlkreislauf (71) umfasst.

4. Arbeitsgerät nach Anspruch 3, **dadurch gekennzeichnet, dass** die Verbindung des Hydraulikkreislaufs und des Kühlmittelkreislaufs (71) über einen in dem Hydraulikkreislauf angeordneten Hydraulikfluidtank (2) erfolgt.

5. Arbeitsgerät nach Anspruch 2, **dadurch gekennzeichnet, dass** der Wärmeübertrager einen Wärmetauscher (6) umfasst, der dem Kühler (72) vorgeschaltet in dem Kühlkreislauf (71) des Verbrennungsmotors (7) angeordnet ist, wobei der Kühlkreislauf (71) und/oder der Hydraulikkreislauf vorteilhaft eine den Wärmetauscher umgehende Bypassleitung aufweist, in der ein Ventil angeordnet ist, das in Abhängigkeit von der Temperatur des Hydraulikfluidstroms und/oder des Kühlmittelstroms ansteuerbar ist.

6. Arbeitsgerät nach einem der Ansprüche 2 bis 5, **dadurch gekennzeichnet, dass** der Wärmeübertrager über ein Ventil (61, 75) mit dem Hydraulikkreislauf oder dem Kühlkreislauf (71) verbunden ist, das über ein Steuer- und Regelmodul (8) ansteuerbar ist, wobei in dem Hydraulickreislauf ein Temperatursensor (81) angeordnet ist, der mit dem Steuer- und Regelmodul (8) verbunden ist.

7. Arbeitsgerät nach einem der vorgenannten Ansprüche, **dadurch gekennzeichnet, dass** der Hydraulikkreislauf und der Abgasstrom des Verbrennungsmotors (7) über einen Wärmeübertrager, vorzugsweise umfassend wenigstens einen Wärmetauscher (6), thermisch verbunden sind.

8. Arbeitsgerät nach Anspruch 7, **dadurch gekennzeichnet, dass** an dem Verbrennungsmotor (7) eine Abgasleitung (74) angeordnet ist, die mit einem Abzweig versehen ist, der mit dem Wärmeübertrager verbunden ist, wobei die Abgasleitung (74) vorteilhaft mit einer Klappensteuerung versehen ist, über die sie temporär verschließbar ist.

9. Arbeitsgerät nach Anspruch 7 oder 8, **dadurch gekennzeichnet, dass** der Abgasstrom über einen ein Wärmeträgerfluid aufweisenden Wärmetransferkreislauf (62) mit dem Hydraulikkreislauf thermisch verbunden ist, der über eine Pumpe (63) betrieben ist.

10. Arbeitsgerät nach Anspruch 9, **dadurch gekennzeichnet, dass** ein Steuer- und Regelmodul (8) angeordnet ist, über das die Pumpe (63) steuerbar ist, wobei in dem Hydraulikkreislauf ein Temperatursensor (81) angeordnet ist, der mit dem Steuer- und Regelmodul (8) verbunden ist.

11. Arbeitsgerät nach Anspruch 9 oder 10, **dadurch gekennzeichnet, dass** das Wärmeträgerfluid ein synthetisches Ester, eine Salzschmelze oder ein flüssiges Metall ist.

12. Arbeitsgerät nach einem der vorgenannten Ansprüche, **dadurch gekennzeichnet, dass** der Verbrennungsmotor (7) einen Lader aufweist und der verdichtete Ladeluftstrom des Laders und der Hydraulikkreislauf über einen Wärmeübertrager thermisch verbunden sind, wobei der Wärmeübertrager bevorzugt in der Ladeluftzuleitung hinter dem Lader angeordnet ist.

13. Verfahren zur temporären Erwärmung des Hydraulikfluids des Hydraulikkreislaufs eines Arbeitsgerätes mit hydraulischem Antrieb für Tiefbauarbeiten, insbesondere eines Bohr- oder Vibrationsrammgerätes, welcher Hydraulikkreislauf über eine Hydraulikpumpe (1) gespeist wird, die von einem einen Kühlmittelkreislauf (71) aufweisenden Verbrennungsmotor (7) angetrieben wird, wobei das Hydraulikfluid für einen definierten Zeitraum durch einen Wärmeübertrager geleitet wird, dem zur Übertragung thermischer Energie ein Fluidstrom des Verbrennungsmotors (7) zugeleitet wird.

14. Verfahren nach Anspruch 13, **dadurch gekennzeichnet, dass** der Wärmeübertrager über eine Leitung (31, 71) mit dem Hydraulikkreislauf verbunden wird, in der ein Mehrwegeventil (61, 75) angeordnet wird.

15. Verfahren nach Anspruch 13 oder 14, **dadurch gekennzeichnet, dass** der Fluidtank des Hydraulikkreislaufs als kombinierter Stoff- und Wärmeübertrager verwendet wird, wobei das Hydraulikfluid zugleich als Kühlmittel verwendet wird, welches Hydraulikfluid bevorzugt ein synthetisches Ester (HEES) ist, und wobei der Hydraulikkreislauf bedarfsweise für einen definierten Zeitraum mit dem Kühlkreislauf (71) des Verbrennungsmotors (7) verbunden wird.

## Claims

1. Tool with hydraulic drive for civil engineering works, in particular a drill or vibratory pile-driving device, comprising a hydraulic motor, which is operated via a fluid of a hydraulic circuit, which is fed via a hydraulic pump, which is driven by a combustion engine, **characterised in that** at least one heat transfer unit for the transfer of thermal energy of a fluid flow of the combustion engine (7) to the fluid of the hydraulic circuit is arranged.

2. Tool according to claim 1, **characterised in that** the hydraulic circuit and the cooling circuit (71) of the combustion engine (7) are thermally connected via a heat transfer unit.

3. Tool according to claim 2, **characterised in that** the heat transfer unit is equipped for combined heat and mass transfer, wherein the hydraulic fluid is identical to the cooling medium and wherein the heat transfer unit comprises means for the coupling and decoupling of hydraulic circuit and cooling circuit (71).

4. Tool according to claim 3, **characterised in that** the connection of the hydraulic circuit and the cooling medium circuit (71) is made via a hydraulic fluid tank (2) arranged in the hydraulic circuit.

5. Tool according to claim 2, **characterised in that** the heat transfer unit comprises a heat exchanger (6), which is installed upstream of the radiator (72) in the cooling circuit (71) of the combustion engine (71), wherein the cooling circuit (71) and/or the hydraulic circuit advantageously has a bypass line bypassing the heat exchanger, in which a valve is arranged, which can be controlled in dependence on the temperature of the hydraulic fluid flow and/or the cooling medium flow.

6. Tool according to one of claims 2 to 5, **characterised in that** the heat transfer unit is connected to the hydraulic circuit or the cooling circuit (71) via a valve (61, 75), which can be controlled via a control and regulation module (8), wherein a temperature sensor (81) is arranged in the hydraulic circuit, which is connected to the control and regulation module (8).

7. Tool according to one of the previous claims, **characterised in that** the hydraulic circuit and the exhaust gas flow of the combustion engine (7) are thermally connected via a heat transfer unit, preferably comprising at least one heat exchanger (6).

8. Tool according to claim 7, **characterised in that** an exhaust pipe (74) is arranged at the combustion engine (7), which is provided with a branch, which is connected to the heat transfer unit, wherein the exhaust pipe (74) is advantageously provided with a valve control system, via which it can be temporarily closed.

9. Tool according to claim 7 or 8, **characterised in that** the exhaust gas flow is thermally connected to the hydraulic circuit via a heat transfer circuit (62) having a heat transfer fluid, via which a pump (63) is operated.

10. Tool according to claim 9, **characterised in that** a control and regulation module (8) is arranged, via which the pump (63) can be controlled, wherein in the hydraulic circuit a temperature sensor (81) is arranged, which is connected to the control and regulation module (8).

11. Tool according to claim 9 or 10, **characterised in that** the heat transfer fluid is a synthetic ester, molten salt or a liquid metal.

12. Tool according to one of the previous claims, **characterised in that** the combustion engine (7) has a supercharger and the compressed supercharged air stream of the supercharger and the hydraulic circuit are thermally connected via a heat transfer unit, wherein the heat transfer unit is preferably arranged in the charge air supply line downstream of the supercharger.

13. Method for the temporary heating of the hydraulic fluid of the hydraulic circuit of a tool with hydraulic drive for civil engineering works, in particular of a drill or vibratory pile-driving device, which hydraulic circuit is fed via a hydraulic pump (1), which is driven by a combustion engine (7) having a cooling medium circuit (71), wherein the hydraulic fluid is directed through a heat transfer unit for a defined period of time, which is supplied with a fluid flow of the combustion engine (7) for the transfer of thermal energy.

14. Method according to claim 13, **characterised in that** the heat transfer unit is connected to the hydraulic circuit via a line (31, 71), in which a multiway valve (61, 75) is arranged.

15. Method according to claim 13 or 14, **characterised in that** the fluid tank of the hydraulic circuit is used as a combined mass and heat transfer unit, wherein the hydraulic fluid is simultaneously used as a cooling medium, which hydraulic fluid preferably is a synthetic ester (HEES) and wherein the hydraulic circuit is connected to the cooling circuit (71) of the combustion engine (7) for a defined period of time as required.

## Revendications

1. Appareil de travail doté d'un entraînement hydraulique pour travaux de génie civil, notamment appareil de forage et de vibrofonçage comprenant un moteur hydraulique qui fonctionne via le fluide d'un circuit hydraulique alimenté par une pompe hydraulique entraînée par un moteur à combustion, **caractérisé en ce qu'**est disposé au moins un dispositif transmetteur de chaleur servant à transmettre au fluide du circuit hydraulique l'énergie thermique d'un flux de fluide provenant du moteur à combustion (7).

2. Appareil de travail selon la revendication 1, **caractérisé en ce que** le circuit hydraulique et le circuit de refroidissement (71) du moteur à combustion (7) sont reliés thermiquement par un dispositif transmetteur de chaleur.

3. Appareil de travail selon la revendication 2, **caractérisé en ce que** le dispositif transmetteur de chaleur est configuré pour transmettre de façon combinée la chaleur et une substance, sachant que le fluide hydraulique et le liquide de refroidissement sont identiques et sachant que le dispositif transmetteur de chaleur comprend des moyens pour coupler et découpler le circuit hydraulique et le circuit de refroidissement (71).

4. Appareil de travail selon la revendication 3, **caractérisé en ce que** la jonction du circuit hydraulique et du circuit de liquide de refroidissement (71) a lieu via un réservoir de fluide hydraulique (2) disposé dans le circuit hydraulique.

5. Appareil de travail selon la revendication 2, **caractérisé en ce que** le dispositif transmetteur de chaleur comprend un échangeur thermique (6) placé en amont du radiateur (72) dans le circuit de refroidissement (71) du moteur à combustion (7), sachant que le circuit de refroidissement (71) et/ou le circuit hydraulique présentent avantageusement une conduite de bypass contournant l'échangeur thermique, conduite dans laquelle est disposée une vanne pilotable en fonction de la température du flux de fluide hydraulique et/ou du flux de liquide de refroidissement.

6. Appareil de travail selon l'une des revendications 2 à 5, **caractérisé en ce que** le dispositif transmetteur de chaleur est relié via une vanne (61, 75) au circuit hydraulique ou au circuit de refroidissement (71), vanne qui est pilotable via un module (8) de commande et régulation, sachant que dans le circuit hydraulique est disposé un capteur de température (81) relié au module (8) de commande et régulation.

7. Appareil de travail selon l'une des revendications précédentes, **caractérisé en ce que** le circuit hydraulique et le flux de gaz d'échappement du moteur à combustion (7) sont reliés thermiquement via un dispositif transmetteur de chaleur comprenant de préférence au moins un échangeur thermique (6).

8. Appareil selon la revendication 7, **caractérisé en ce que** contre le moteur à combustion (7) est disposée une conduite (74) de gaz d'échappement munie d'une bifurcation reliée au dispositif transmetteur de chaleur, sachant que la conduite (74) de gaz d'échappement est avantageusement munie d'une commande à vanne permettant de l'obturer temporairement.

9. Appareil de travail selon la revendication 7 ou 8, **caractérisé en ce que** le flux de gaz d'échappement est relié thermiquement, via un circuit de transfert de chaleur (62) présentant un fluide caloporteur, au circuit hydraulique fonctionnant via une pompe (63).

10. Appareil de travail selon la revendication 9, **caractérisé en ce qu'**est disposé un module (8) de commande et de régulation permettant de piloter la pompe (63), sachant que dans le circuit hydraulique est disposé un capteur de température (81) relié au module (8) de commande et régulation.

11. Appareil de travail selon la revendication 9 ou 10, **caractérisé en ce que** le fluide caloporteur est un ester synthétique, un sel fondu ou un métal liquide.

12. Appareil de travail selon l'une des revendications précédentes, **caractérisé en ce que** le moteur à combustion (7) présente un compresseur et que le flux d'air de suralimentation compressé par le compresseur et le circuit hydraulique sont reliés thermiquement via un dispositif transmetteur de chaleur, sachant que le dispositif transmetteur de chaleur est disposé de préférence dans la conduite d'amenée d'air de suralimentation en aval du compresseur.

13. Procédé d'échauffement temporaire du fluide hydraulique du circuit hydraulique d'un appareil de travail à entraînement hydraulique pour travaux de génie civil, en particulier d'un appareil de forage ou de vibrofonçage, lequel circuit hydraulique est alimenté via une pompe hydraulique (1) entraînée par un moteur à combustion (7) présentant un circuit (71) de liquide de refroidissement, sachant que le fluide hydraulique est guidé pendant une période définie à travers un dispositif transmetteur de chaleur auquel est conduit un flux de fluide du moteur à combustion (7) pour transmettre de l'énergie thermique.

14. Procédé selon la revendication 13, **caractérisé en ce que** le dispositif transmetteur de chaleur est relié au circuit hydraulique par une conduite (31, 71) dans laquelle est disposée une vanne multivoies (61, 75).

15. Procédé selon la revendication 13 ou 14, **caractérisé en ce que** le réservoir de fluide du circuit hydraulique est utilisé comme dispositif combiné transmetteur de substance et de chaleur, sachant que le fluide hydraulique est simultanément utilisé comme liquide de refroidissement, lequel fluide hydraulique est de préférence un ester synthétique (HEES) et sachant que le circuit hydraulique est relié suivant besoin, pour une période définie, au circuit de refroidissement (71) du moteur à combustion (7).
